# EUROPEAN PATENT SPECIFICATION

(11) **EP 2 602 504 B1**
(45) Date of publication and mention of the grant of the patent: **21.05.2014**
(21) Application number: 11192854.5
(22) Date of filing: 09.12.2011
(51) Int. Cl.: F16D 7/02, F16H 1/46, F16H 35/10

(54) **Planetary or epicyclic gear assembly with protection clutch**
Schutzkupplung
Embrayage de protection

(43) Date of publication of application: 12.06.2013
(73) Proprietor: Robert Bosch GmbH, 70442 Stuttgart (DE)
(72) Inventor: Heywood, Peter, Norton IP31 3LE (GB); Beadman, Robert, Stowmarket, Suffolk IP14 2AU (GB); Fowles, Andrew, Colchester, Essex Longridge Park (GB); Malik, Istvan, 1133 Budapest (HU); Wilkins, Richard, Stowmarket, Suffolk IP14 1EY (GB); Lister, John, Stowmarket, Suffolk IP14 1EY (GB)

(56) References cited:
- US-A- 4 791 833
- US-A- 5 551 927
- US-A1- 2004 058 777

## Description

The present invention relates to a planetary or epicyclic gear assembly. The invention also relates to a power tool. A gear assembly according to the preamble of claim 1 is known from US-A-4 791 833.

Hedgecutters are hand-held apparatus comprising a pair of elongate aligned toothed blades of which at least one is caused to reciprocate continuously by means of an electric motor or a small petrol engine. Branches of a hedge fall, in use, between adjacent teeth of one of the blades and are cut by the passing motion of the other blade.

Hedgecutters inevitably come into contact with metal fencing and steel wire and other obstructions. At working speed, the motor rotor has high rotational energy. If this were brought to a sudden stop, the transmitted torque would be sufficiently high to cause potentially catastrophic damage to the apparatus. High-end hedgecutters therefore include a slipping clutch to protect the drive and cutting means. Typically, the slipping clutch is set at about 30Nm. If the drive system is blocked, the drive can continue to rotate by about one cycle, typically about fifteen turns of the motor.

A slipping clutch is typically provided as a separate element of the drive train of an apparatus. This adds both weight and size to the apparatus. The present invention seeks to provide a solution to these problems.

In its broadest sense the present invention provides a planetary gear assembly comprising an integral protection or slipping clutch.

More particularly, the present invention provides a planetary or epicylic gear assembly comprising first and second stages, each stage comprising a respective sun gear; one or more planet gears mounted within a respective ring gear and mounted to a respective planet carrier; characterised in that the first and second stage ring gears are formed with an axial overlap provided by matching or making frusto-conical surfaces.

Preferably, the frusto-conical surface of at least one of the first and second stage ring gears is formed of bronze.

Preferably, the at least one ring gear is formed by mounting a bronze ring to a ring gear support.

Preferably, the assembly further comprises a biasing element biasing the first and second ring gears into contact.

Preferably, the biasing element is a spring.

Advantageously, the first planet carrier and the second sun gear are formed as a single component.

Optionally, the gear assembly comprises further gear stages. In preferred embodiments, the gear assembly is a two-stage gear.

The present invention also provides a power tool comprising a gear assembly as described above and further comprising an electric motor having an output shaft or pinion operatively coupled to or formed with the first sun gear.

Advantageously, the power tool further comprises a working tool actuated, in use, through a drive shaft wherein the second planet carrier is mountable to the drive shaft.

The above and other aspects of the invention will now be described in further detail, by way of example only, with reference to the accompanying drawings, in which:
Figure 1 is a cross-sectional view of a first embodiment of gear assembly in accordance with the present invention;
Figure 2 is an exploded perspective view of the gear assembly of Figure 1;
Figure 3 is a cross-sectional view of a second embodiment of a gear assembly in accordance with the present invention;
Figure 4 is an exploded perspective view of the assembly of Figure 3;
Figure 5 is a perspective view of an assembled housing and gear rings of the assembly of Figure 3; and
Figure 6 is a perspective view of the second stage gear ring with coupled bronze ring of the assembly of Figure 3.

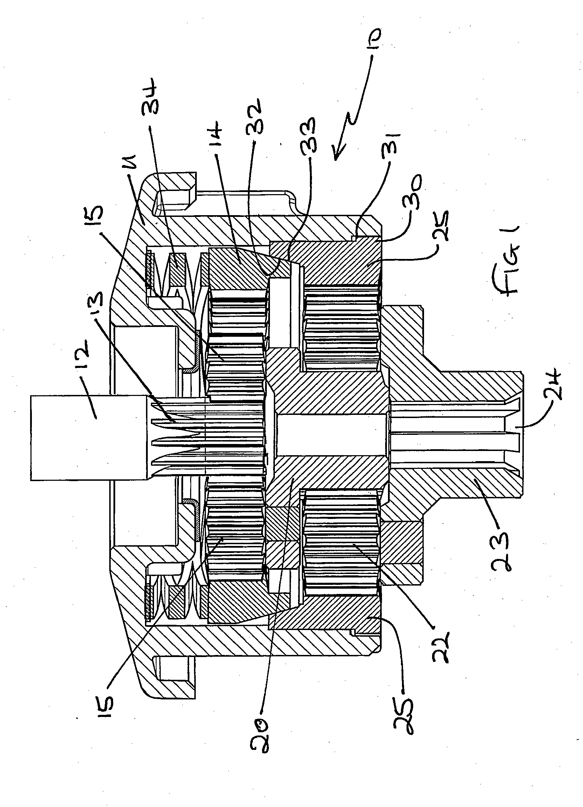

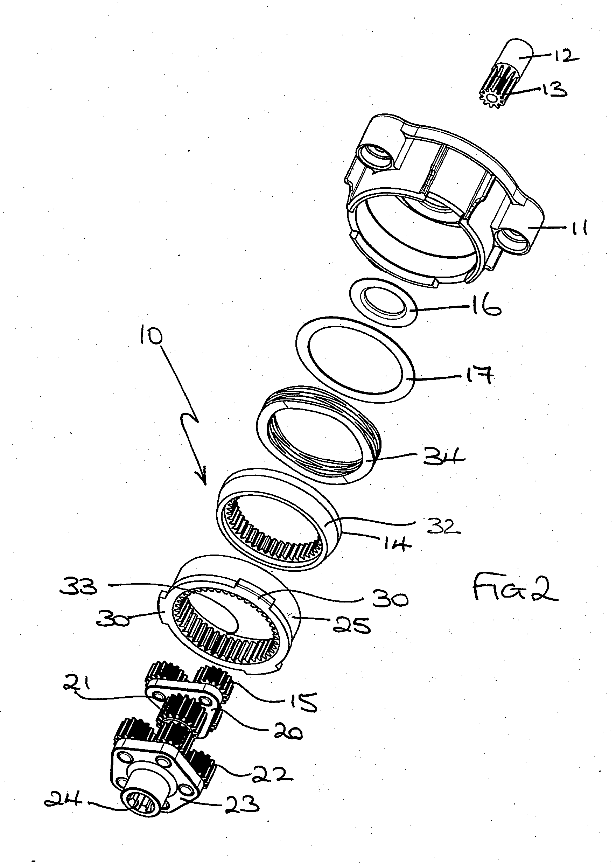

With reference to Figures 1 and 2, there is shown a two-stage planetary gear assembly 10 including an upper housing 11. The gear assembly 10 further includes a lower housing which may be formed by a component of the apparatus into which the gear is to be assembled and so is omitted here.

The gear assembly has an input shaft 12 providing a gear 13 forming the sun gear of the first stage of the planetary gear; and a first ring gear 14. Planet gears 15 of the first stage are mounted to first stage planet carrier 20 to be rotatable within ring gear 14.

First stage planet carrier 20 also carries, in the embodiment shown of a compact gear assembly, the sun gear 21 of the second stage planetary gear. Similarly, second stage planet gears 22 are supported on a second stage planet carrier 23 which also includes, in the embodiment shown, an output coupling 24 for engagement with the input shaft of a tool, such as the drive shaft of a hedgecutter blade assembly or other working tool.

The second stage also includes a second stage ring gear 25. Ring gear 25 is rotationally fixed or locked with respect to housing 11, for example by keying by means of circumferentially-mounted radial projections 30 to ring gear 25 engaging corresponding apertures 31 formed in housing 11.

As seen most clearly in Figure 1, first to and second ring gears 14, 25 are formed to overlap axially by provision of mating male and female frusto-conical surfaces, in the embodiment shown, by an outer-facing (or male) frusto-conical surface 32 to first stage ring gear 14 and an inner-facing (or female) frusto-conical surface 33 to second stage ring gear 25. First stage ring gear 14 is free to rotate within housing 11.

Within normal tolerances, the cone angles on both surfaces 32, 33 are the same. The cone angle is selected to provide the required degree of slipping torque.

Known cone clutches typically use sintered steel of the cone clutch components. Particularly effective results have been found if the frusto-conical surface of at least one of ring gears 14, 25 is formed of sintered bronze, especially of C50 or D50 type, more especially with double compacting, has been found to be particularly effective. Suitably, the frusto-conical surfaces are formed by machining.

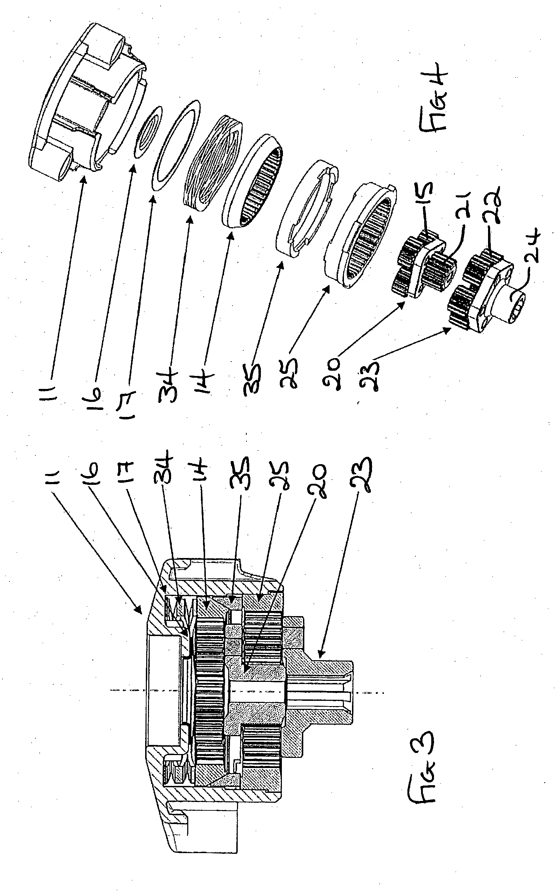

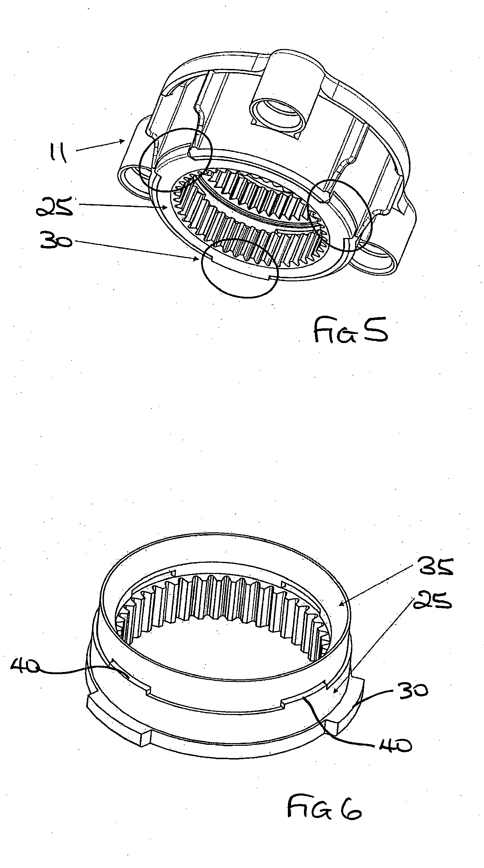

Advantageously (as shown in the second embodiment illustrated in Figures 3 to 6), the bronze surface is formed as a ring 35 mountable to a ring gear, formed of steel. In the embodiment shown, bronze ring 35 is mounted to second stage ring gear 25. This is seen most clearly in Figure 6. In alternative embodiments (not shown) bronze ring is mounted to first stage ring gear. A plurality of fixing grooves or lugs 40 locate the bronze ring to the gear.

The planetary gear assembly further includes a biasing spring 24, typically of the compression type, between housing 11 and first stage ring gear 14 to provide a biasing force to bias frusto-conical surfaces 32, 33 into contact. The spring strength of biasing spring 34 is selected to provide the desired slip between the two ring gears 14, 25. The spring 34 also determines the torsional limit below which ring gear 14 is able to rotate within its portion of housing 11.

As is illustrated, conveniently a hardened steel shim 16 and washer 17 are interposed between biasing spring 34 and housing 11 to prevent the gears wearing through the housing 11 if it is fabricated from a soft metal such as aluminium.

During normal use, the friction built up by the pressing force of spring 34 between the bronze ring and the first stage ring gear 14 keeps the first stage ring gear in position. There is no slip. When the system suffers a sudden load peak, for example, caused by a stall resulting from encountering an uncuttable material, a loading torque peak starts to act on the gears of the drive mechanism. As the loading torque gets bigger than the locking torque (the friction force multiplied by the radius of the first stage ring gear 14) generated by the spring force, the first stage ring gear - as the only part to move - slips and instantly reduces the impact load. As the load reduces the first stage ring gear 14 is locked again by the torque of the frictional force.

Although indicated above with respect to hedgecutters, the improvement is equally suitable for inclusion in planetary gear drives for other tools. Those tools can typically be characterized as those in which the inertia of the rotating parts contributes significantly to the ability of the machine to perform its role, typically a cutting role, and in which there also exists the possibility of the cutting system being brought to a dead stop from high speed, including lawnmowers and shredders.

In the case of the hedgecutter, the momentary peak loads during the cutting of thicker branches are overcome by the rotational energy of the motor. Even though the motor itself is relatively small, it runs at high speed (and it will be appreciated that its rotational energy is based on the square of the speed). In the event of this being insufficient to complete a cut, the blades will nevertheless be brought to a sudden stop. This event could produce an extremely high torque at the gearbox output/blade drive input easily capable of destroying the drive system if a slipping clutch such as that described herein were not included in the design. As noted, such clutches are customarily set to cap the maximum blade drive input torque to 30 - 50Nm.

## Claims

1. A planetary or epicylic gear assembly (10) comprising first and second stages, each stage comprising a respective sun gear (13, 21); one or more planet gears (15, 22) mounted within a respective ring gear (14, 25) and mounted to a respective planet carrier (20, 23); **characterised in that** the first and second stage ring gears (14, 25) are formed with an axial overlap provided by mating or matching frusto-conical surfaces (32, 33).

2. A gear assembly as claimed in claim 1 wherein the frusto-conical surface (32, 33) of at least one of the first and second stage ring gears (14, 25) is formed of bronze.

3. A gear assembly as claimed in claim 2 wherein the at least one ring gear is formed by mounting a bronze ring (35) to a ring gear support (25).

4. A gear assembly as claimed in any one of claims 1 to 3 further comprising a biasing element (34) biasing the first and second ring gears (14, 25) into contact.

5. A gear assembly as claimed in claim 4 wherein the biasing element (34) is a spring.

6. A gear assembly as claimed in any preceding claim wherein the first planet carrier (20) and the second sun gear (21) are formed as a single component.

7. A gear assembly as claimed in any preceding claim wherein the gear assembly comprises further gear stages.

8. A power tool comprising a gear assembly as claimed in any one of claims 1 to 7 further comprising an electric motor having an output shaft (12) or pinion operatively coupled to or formed with the first sun gear (13).

9. A power tool as claimed in claim 8 further comprising a drivable tool, drivable, in use, through a drive shaft, wherein the second planet carrier (23) is mountable (24) to the drive shaft.

## Patentansprüche

1. Planetengetriebe (10), das erste und zweite Stufen umfasst, wobei jede Stufe ein jeweiliges Sonnenrad (13, 21) sowie ein oder mehrere Planetenräder (15, 22) umfasst, die innerhalb eines jeweiligen Hohlrads (14, 25) montiert und an einem jeweiligen Planetenträger (20, 23) montiert sind, **dadurch gekennzeichnet, dass** die zur ersten und zweiten Stufe gehörenden Hohlräder (14, 25) mit einer axialen Überlappung ausgebildet sind, die durch zusammenpassende oder aufeinander abgestimmte kegelstumpfförmige Oberflächen (32, 33) bereitgestellt wird.

2. Getriebe nach Anspruch 1, bei dem die kegelstumpfförmige Oberfläche (32, 33) von mindestens einem der zur ersten und zweiten Stufe gehörenden Hohlräder (14, 25) aus Bronze gebildet ist.

3. Getriebe nach Anspruch 2, bei dem das mindestens eine Hohlrad durch Montage eines Bronzerings (35) an einem Hohlradabstützelement (25) gebildet ist.

4. Getriebe nach einem der Ansprüche 1 bis 3, das weiterhin ein Vorspannelement (34) umfasst, um die zur ersten und zweiten Stufe gehörenden Hohlräder (14, 25) durch Vorspannen in Kontakt zu bringen.

5. Getriebe nach Anspruch 4, bei dem das Vorspannelement (34) eine Feder ist.

6. Getriebe nach einem der vorstehend aufgeführten Ansprüche, bei dem der erste Planetenträger (20) und das zweite Sonnenrad (21) als ein einzelnes Bauteil ausgebildet sind.

7. Getriebe nach einem der vorstehend aufgeführten Ansprüche, wobei das Getriebe weitere Getriebestufen umfasst.

8. Kraftbetriebenes Werkzeug, das ein Getriebe nach einem der Ansprüche 1 bis 7 umfasst, und das weiterhin einen Elektromotor mit einer Abtriebswelle (12) oder einem Ritzel umfasst, das betriebswirksam mit dem ersten Sonnenrad (13) gekoppelt oder damit ausgebildet ist.

9. Kraftbetriebenes Werkzeug nach Anspruch 8, das weiterhin ein antreibbares Werkzeug umfasst, das im Gebrauch durch eine Antriebswelle angetrieben werden kann, wobei der zweite Planetenträger (23) an der Antriebswelle montierbar (24) ist.

## Revendications

1. Ensemble d'engrenage planétaire ou épicycloïdal (10) comprenant des premier et deuxième étages, chaque étage comprenant une roue solaire respective (13, 21) ; un ou plusieurs satellites (15, 22) montés à l'intérieur d'une couronne respective (14, 15) et montés sur un porte-satellites respectif (20, 23) ; **caractérisé en ce que** les couronnes (14, 25) des premier et deuxième étages sont formées avec un chevauchement axial réalisé par accouplement ou mise en correspondance de surfaces tronconiques (32, 33).

2. Ensemble d'engrenage selon la revendication 1, dans lequel la surface tronconique (32, 33) d'au moins l'une des couronnes (14, 25) des premier et deuxième étages est formée de bronze.

3. Ensemble d'engrenage selon la revendication 2, dans lequel l'au moins une couronne est formée en montant une bague en bronze (35) sur un support de couronne (25).

4. Ensemble d'engrenage selon l'une quelconque des revendications 1 à 3, comprenant en outre un élément de précontrainte (34) sollicitant les première et deuxième couronnes (14, 25) en contact.

5. Ensemble d'engrenage selon la revendication 4, dans lequel l'élément de précontrainte (34) est un ressort.

6. Ensemble d'engrenage selon l'une quelconque des revendications précédentes, dans lequel le premier porte-satellites (20) et la deuxième roue solaire (21) sont formés sous la forme d'un composant unique.

7. Ensemble d'engrenage selon l'une quelconque des revendications précédentes, dans lequel l'ensemble d'engrenage comprend d'autres étages d'engrenage.

8. Outil électrique comprenant un ensemble d'engrenage selon l'une quelconque des revendications 1 à 7, comprenant en outre un moteur électrique ayant un arbre de sortie (12) ou un pignon accouplé fonctionnellement à, ou formé avec, la première roue solaire (13).

9. Outil électrique selon la revendication 8, comprenant en outre un outil pouvant être entraîné, lequel peut être entraîné, pendant l'utilisation, par un arbre d'entraînement, le deuxième porte-satellites (23) pouvant être monté (24) sur l'arbre d'entraînement.
